# EUROPEAN PATENT APPLICATION

(11) **EP 4 718 038 A1**
(43) Date of publication of application: **01.04.2026**
(21) Application number: 25205243.6
(22) Date of filing: 29.09.2025
(51) Int. Cl.: G01F 1/66, F15D 1/04, G01F 1/684, G01F 15/14, G01F 15/02, G01F 15/18

(54) **FLUID METER, ESPECIALLY GAS METER, WITH LOW PRESSURE ABSORPTION**

(30) Priority: 30.09.2024 IT 202400021678
(71) Applicant: Metersit Srl, 35129 Padova (IT)
(72) Inventor: FERRARI, Francesco, 35129 Padova (IT); LA CHIESA, Giorgia, 35129 Padova (IT); MARCANTE, Marco, 35129 Padova (IT); SANTI, Giovanni, 35129 Padova (IT); CARRARO, Giorgio, 35129 Padova (IT)
(74) Representative: Caruti, Filippo

(57) **Abstract**

The present invention relates to a fluid meter (1) provided with a hollow box-shaped body (10), which delimits a measuring compartment (11), an inlet duct (14) and an outlet duct (15), which allow a flow of fluid into and out of the measuring compartment (11), respectively. A separator assembly (2; 7) is included in the measuring compartment. The separator assembly (2; 7) is adapted to define an inlet region (211; 111), adapted to receive the flow of fluid entering the measuring compartment (11) through the inlet duct (14), and an outlet region (212; 112), adapted to receive the flow of fluid exiting the measuring compartment (11) through the outlet duct (15). Furthermore, the separator assembly (2; 7) comprises at least one opening (24; 71) adapted to allow a flow of fluid between the inlet region (211; 111) and the outlet region (212; 112). Measuring means (3; 5) are arranged within the inlet region (211; 111) in order to provide an indication of a quantity of fluid passing through the fluid meter. The measuring means comprise at least one measuring duct (3) coupled to said at least one opening (242; 71) of the separator assembly (2; 7).

Advantageously, the fluid meter comprises a fluid-dynamic element (4; 4A) arranged in the outlet region (212; 112). The fluid-dynamic element (4; 4A) comprising an inlet opening (42), coupled to the opening (24; 71) of the separator assembly (2; 7), and a free outlet opening (43). The surface of the outlet opening (43) has a substantially oval shape and is larger than the surface of the inlet opening (42), which has a substantially circular shape.

## Description

### TECHNICAL FIELD

The present invention relates to fluid meters, such as gas meters or water meters, and methods for updating the software components of meters installed on site. More particularly, the invention relates to a meter according to the preamble of claim 1.

### BACKGROUND

Gas metering devices (meters) are widely used by the fuel gas industry to monitor the quantity of gas consumed by both domestic utilities and commercial and industrial utilities.

A meter installed on a branch of a distribution network always represents an obstacle to the flow of the fluid. As a result, the meters cause a phenomenon called "pressure absorption", also referred to in the sector as "pressure drop" of the meter. The pressure absorption is a data that characterizes each meter, and which the installer must take into account when installing and starting the meter. The pressure drop depends on the flow of gas flowing through the meter, in particular, it increases as the flow rate of the flow increases following a curve peculiar to the given meter.

In general, the total pressure absorption of a meter is determined by the sum of the absorption due to fluid-dynamic resistance and that due to mechanical resistances. The first one is basically due to the turbulences inherent in the passage of an aeriform fluid through a fluid-dynamically inefficient instrument, while the second one is due to the frictions and inertia of possible moving mechanical parts. Considering the gas meters provided with thermal mass sensors, these meters are characterized by the total absence of mechanical elements in motion or subject to elastic deformation (e.g.: gears, membranes), therefore the pressure absorption in this type of meters is caused solely by the absorption due to the fluid-dynamic resistance.

The pressure drop must be maintained within predetermined maximum values, in order to guarantee a correct and efficient operation of the fluid distribution network. In this regard, several national laws and international regulations, such as standard EN 17526:2021 and Directive 2014/32/EU of the European Parliament and of the Council of 24 February 2014, define the constraints that each gas meter must meet in order to be sold on the market and installed in the local gas network.

In the art, in order to reduce the pressure absorption in a membrane-type meter JP 6584872 proposes to round the corners or edges formed by contiguous walls inside the meter, so that when flowing from one wall to the other of the two walls the gas does not stagnate in the vicinity of the junction between the walls (if at an angle), or follows with greater continuity the path variation caused by the junction between the walls (if at an edge).

In the case of meters with a thermal mass sensor, the Applicant has found that this type of solution does not constitute a guarantee in terms of achievement of the requirements that are required. Thermal mass sensor meters, in fact, despite being without elements subject to movement or elastic deformation that can cause mechanical resistances, are provided with an element generally referred to as a "flow linearizer" necessary for optimal operation of the thermal mass sensor but capable of causing significant fluid-dynamic resistances.

For example, document CN 208833306 describes a "rectifier device" inserted, as an additional element, internally to the meter compartment, connected to the inlet nozzle. This device is characterised by a dual function: to slow down part of the incoming gas, and to filter solid particles or impurities present in the gas fed into the meter. This rectifier device consists essentially of a cylindrical tube or duct, inside which a smaller duct is inserted coaxially. The inner duct has a frusto-conical cavity and an outer profile characterised instead by a "protrusion" or diametrical enlargement, which develops along the entire cross-section of the inner duct. A part of the gas flow coming from the inlet nozzle of the meter is subject to a speed reduction, due to the progressive increase of the tube section. The reduction in speed of the portion of the gas flow that passes through the central section causes a "stabilization" of the gas flow that passes through the meter compartment and which then continues, reaching the outlet nozzle. However, the remaining part of the gas passes through the choke defined between the body of the inner duct and the inner surface of the cylindrical structure that encloses the whole, and is subject to an increase in speed. In addition, the meeting between the fronts of the two portions of gas flow at different speeds generates turbulences.

Consequently, the rectifier device CN 208833306 does not allow to reduce or control pressure drops associated with the meter in which it is installed. On the contrary, the generation of turbulences near the outlet of the rectifier device can exacerbate the problem of the pressure drops.

Furthermore, US 2020/056916 describes a gas meter comprising a body. The gas meter further comprises a flow rate measuring unit arranged inside the body. The flow rate measuring unit has a measuring flow passage with a straight tubular shape and provided with an inlet opening and an outlet opening traversed by the fluid to be measured, and a shut-off valve positioned in an extended section extending from the outlet opening of the gas meter body therein. The inlet port of the measuring unit is hermetically connected to the extended section so that they are in fluid communication.

US 2019/003868 describes a gas meter with a hollow body accessible via inlet and outlet openings and a shielding plate that is located at a predetermined distance from an opening of the meter inlet. Further, the gas meter includes a flow rate meter that measures the flow rate of the fluid and a connection element that connects the outlet of the flow rate meter and the outlet of the meter to each other. In addition, the meter inlet, the shielding plate, the flow rate meter, the connection element, and the meter outlet are positioned linearly in this order.

JP 2021/117215 discloses an ultrasonic flowrate meter provided with an inlet passage separated from an inlet buffer region by a first partition wall protruding toward the inner face of a meter body. A central hollow part of the body houses a measuring unit arranged between the inlet buffer region and an outlet buffer region. The measuring unit comprises a tubular body provided with inlet and outlet openings in which a flow of fluid flows between the inlet passage and the outlet passage of the meter.

JP 2021/105545 discloses an ultrasonic gas meter comprising a plurality of measuring tubes, wherein the measurement accuracy of the gas flow rate can be increased by stabilizing the flow of gas flowing into or out of each measuring tube. The ultrasonic gas meter includes a gas inlet, a gas outlet, a plurality of tubular-shaped measuring tubes connecting an inflow lung and an outflow lung, flow rate measuring units for measuring the gas flow rate of the measuring tubes, and a plurality of rectifying plates located in at least one of the inflow lung or the outflow lung.

JP 2017/129391 discloses an ultrasonic gas meter provided with a filter formed by a cylindrical element having an outer circumferential shape corresponding to the inner wall surface of an incoming flow path, and an end wall developing continuously at an end of the cylindrical element and provided with an opening constituting a gas passage. The filter is held in place by the surface of the inner wall of the inlet flow path.

JP H 0669748 describes a flowmeter in which a flow rate measuring unit is housed in a box-shaped casing, and a switch is provided on the front surface of the casing. The switch on the measuring unit is directed towards an operating member to be operable by the same without the use of intermediate connection elements.

The proposed structures propose gas meters with flow rate meters provided with structures that require the passage of the flow of the gas to be measured within a duct in which a measuring instrumentation is positioned. These solutions are aimed at improving the measurement of the gas flow rate through the gas meter. However, these solutions are not suitable for effectively limiting the pressure absorption associated with the gas flow through the meter. In other words, the Applicant noted the lack of solutions capable of limiting the pressure absorption within desired values, such as values imposed by the aforementioned regulations, in particular in the case of gas meters designed to operate with flow rates greater than 10 scm/hr. As is known, scm indicates "standard cubic meter", i.e. a measure of the amount of fluid - typically, air - included in a volume of one cubic meter m³/h under known reference conditions. In accordance with the aforementioned regulations, the flow rate values of the gas meters, even if said meters are typically intended for use with combustible gases, are in any case measured using an air flow characterized by a density equal to 1.2 kg/m³ (corresponding to a temperature of 20 °C and a pressure of 1.01325×10⁴ Pa - i.e., 1.01325 bar).

### OBJECTS AND SUMMARY OF THE INVENTION

An object of the present invention is to overcome the drawbacks of the prior art.

In particular, it is an object of the present invention to provide a meter of a quantity of fluid passing through a hydraulic network, for example a gas meter, characterized by a contained pressure drop through a simple and efficient solution.

A further object of the present invention is to propose a fluid meter, for example a gas meter with flow rates greater than 10scm/h, provided with a fluid-dynamic element adapted to regulate the flow of incoming fluid in order to limit the pressure drop of the gas meter.

These and other objects of the present invention are achieved by means of a system incorporating the features of the annexed claims, which form an integral part of the present description.

According to a first aspect, the present invention is directed to a fluid meter, preferably a gas meter, comprising a box-shaped hollow body, which delimits a measuring compartment.

An inlet duct and an outlet duct allow a flow of fluid into and out of the measuring compartment. A separator assembly is included in the measuring compartment. The separator assembly is adapted to define an inlet region, adapted to receive the flow of fluid entering the measuring compartment through the inlet duct, and an outlet region, adapted to receive the flow of fluid exiting the measuring compartment through the outlet duct. Furthermore, the separator assembly comprises at least one opening adapted to allow a flow of fluid between the inlet region and the outlet region. Measuring means are arranged within the inlet region in order to provide an indication of a quantity of fluid passing through the fluid meter. The measuring means comprise at least one measuring duct coupled to said at least one opening of the separator assembly.

Advantageously, the fluid meter comprises a fluid-dynamic element arranged in the outlet region. The fluid-dynamic element comprising an inlet opening, coupled to the opening of the separator assembly, and a free outlet opening. The surface of the outlet opening has a substantially oval shape and is larger than the surface of the inlet opening, which has a substantially circular shape.

The fluid meter according to the present invention allows to reliably measure the quantity of fluid transiting through the fluid meter (i.e. the quantity of fluid supplied to a user) and at the same time ensures a contained pressure absorption, in particular equal to or smaller than the limits imposed by the directives currently in force on gas distribution. These objects are achieved with a compact and robust solution, which can be realized through production techniques typically established in the sector. Therefore, the fluid meter according to the invention can also be realized in large volumes in an economical manner.

In one embodiment, the fluid meter has a maximum flow rate greater than 10 scm/hr.

In one embodiment, a ratio between the surface area of the outlet opening and the inlet opening of the fluid-dynamic element is comprised between about 1 and about 2.2, preferably between about 1.2 and about 2.

In one embodiment, the surface of the outlet opening and of the inlet opening of the fluid-dynamic element lie on substantially parallel planes and are spaced apart from each other by a distance of between about 24 mm and about 70 mm, preferably between about 29 mm and about 64 mm.

In one embodiment, the fluid-dynamic element has a flared asymmetric structure. Preferably, a tubular body of the fluid-dynamic element has a curved portion, which has a lateral section profile defined by a first radius of curvature comprised between about 25 mm and about 45 mm, preferably between about 30 mm and about 40 mm, along a main length direction of the outlet opening.

Even more preferably, a further curved portion of the tubular body has a lateral section profile defined by a further radius of curvature comprised between about 80 mm and about 105 mm, preferably between about 86 mm and about 100 mm.

In one embodiment, the outlet opening of the fluid-dynamic element faces a wall delimiting the outlet region. In particular, the outlet opening is at a distance comprised between about 15 mm and about 60 mm, preferably between about 20 mm and about 55 mm from the wall delimiting the outlet region.

In one embodiment, the outlet opening of the fluid-dynamic element comprises a first lobe, defined by a first lobe curvature radius, and a second lobe, defined by a second lobe curvature radius. Preferably, the first lobe curvature radius is smaller than the second lobe curvature radius. Furthermore, the first lobe and the second lobe of the opening are at a first distance and a second distance, respectively, from the outlet duct of the fluid meter. Advantageously, the first distance is smaller than the second distance.

The dimensions and/or ratios according to the various embodiments have been identified by the Applicant as optimal in order to reduce the pressure absorption associated with the fluid meter.

In one embodiment, wherein the fluid-dynamic element comprises a tubular body and at least one separating wall (or separator, or lamella) extending inside the tubular body. The separating wall divides the volume delimited by the tubular body into at least two ducts.

Preferably, the separating wall has a lateral section profile defined by a radius of curvature equal to or smaller than the first radius of curvature and/or equal to or greater than the second radius of curvature.

The separating walls and, in particular, the ducts defined by them and by the tubular body of the fluid-dynamic element make it possible to obtain a more homogeneous gas flow distribution within the fluid-dynamic element, which reduces turbulences, even in the case of high flow rates.

In one embodiment, the separator assembly comprises a box-shaped body housed within the measuring compartment. In this case, the inlet region and the outlet region are delimited by the box-shaped body and a wall arranged inside the box-shaped body. Furthermore, an inlet opening of the box-shaped body allows access of the flow of fluid from the measuring compartment to the inlet region. Otherwise, a further outlet duct of the separator assembly is coupled to the outlet duct of the gas meter so that only the fluid within the outlet region can leave the fluid meter.

Optionally, the fluid meter comprises a plurality of separator assemblies. In this case, the box-shaped body of each separator assembly houses a respective measuring duct and a respective fluid-dynamic element.

Each box-shaped body and wall forms a muffler (or flow conveyor) that directs the incoming gas flow towards the measuring means and the diffuser. In particular, the conformation of the box-shaped body may be designed to further limit turbulences in the flow of fluid. In addition, providing for more than one box-shaped body inside a measuring compartment allows the flow of fluid to be divided among several measuring ducts and several fluid-dynamic elements, thereby obtaining a more effective measurement of the flow of fluid and an efficient reduction of pressure drops even in the case of particularly high flow rates.

In one embodiment, the separator assembly comprises a septum arranged in the measuring compartment, which is adapted to separate the measuring compartment into the inlet region and the outlet region.

This embodiment of the fluid meter is particularly simple and economical, without adversely affecting the measurement of the flow of fluid or the reduction of the pressure drops.

Optionally, the septum comprises a plurality of openings adapted to allow a flow of fluid between the inlet region and the outlet region. In this case, a respective measuring duct and a respective fluid-dynamic element are coupled to each opening of the plurality of openings.

Also in this embodiment, excellent performance is obtained even in the case of particularly high fluid flow rates.

Further features and objects of the present invention will become more evident from the description below.

### BRIEF DESCRIPTION OF THE DRAWINGS

The invention will be described below with reference to some examples, provided for explanatory and non-limiting purposes, and illustrated in the annexed drawings. These drawings illustrate different aspects and embodiments of the present invention and reference numerals illustrating structures, components, materials and/or similar elements in different drawings are indicated by similar reference numerals, where appropriate.
Figure 1 is a schematic axonometric view of a gas meter according to an embodiment of the present invention;
Figure 2 is a sectional axonometric view of the gas meter of Figure 1 with respect to a sectional plane Π;
Figure 3 is an exploded axonometric view of a flow conveyor according to an embodiment of the present invention comprised in the gas meter of Figure 1;
Figure 4 is a sectional side view of the fluid flow conveyor of Figure 3, deprived of a fluid duct, with respect to the sectional plane Π;
Figure 5A is a front view of a fluid-dynamic element according to an embodiment of the present invention comprised in the measuring module of Figures 3 and 4;
Figure 5B is a sectional side view of the fluid-dynamic element of Figure 5A along a sectional plane PP;
Figure 5C is a rear view of the fluid-dynamic element of Figure 5C, and
Figure 6 is a sectional side view of a fluid-dynamic element according to a different embodiment of the present invention, and
Figure 7 is a sectional side view of a gas meter according to an alternative form of the present invention.

### DETAILED DESCRIPTION OF THE INVENTION

Some preferred embodiments will be described in detail below, although the invention is susceptible to various alternative modifications. It must in any case be understood that there is no intention to limit the invention to the specific embodiment illustrated, but, on the contrary, the invention intends covering all the modifications and/or use of elements or equivalent steps that fall within the scope of the invention as defined in the claims.

Unless otherwise defined, all the terms of the art, notations and other scientific terms used herein are intended to have the meanings commonly understood by those skilled in the art to which this description belongs. In some instances, terms with commonly understood meanings are defined herein for clarity and/or ready reference; the inclusion of such definitions in the present disclosure is therefore not to be construed as representing a substantial difference from what is generally understood in the art.

The terms "comprising", "having", "including" and "containing" are to be understood as open-ended terms (i.e. the meaning "comprising, but not limited to") and are to be considered as a support also for terms such as "consist essentially of", "consisting essentially of", "consist of" or "consisting of".

The use of "for example", "etc.", "or" indicates non-exclusive alternatives without limitation, unless otherwise indicated. The use of "includes" means "includes, but not limited to" unless otherwise indicated.

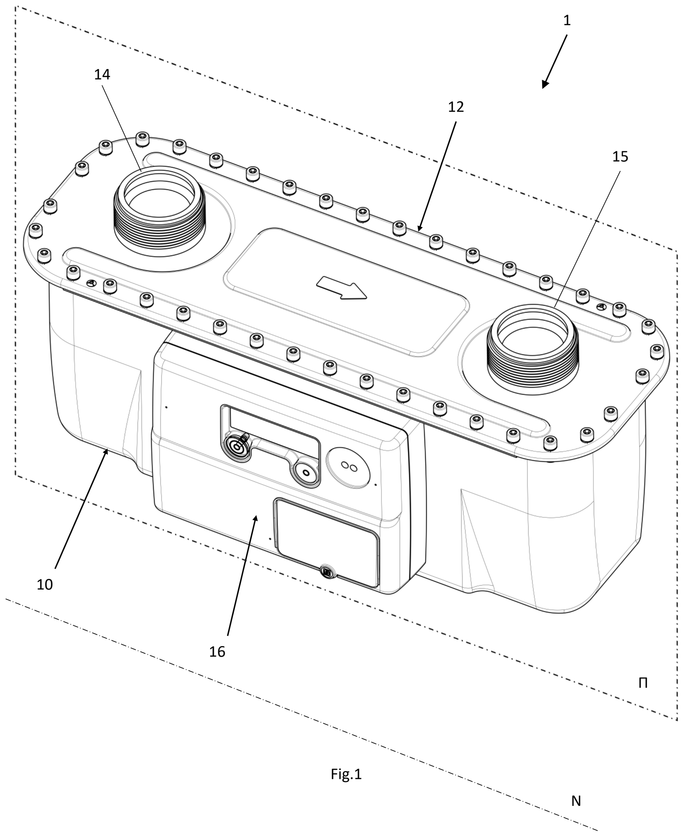

With reference to Figures 1-4, a preferred embodiment of a gas meter 1 is illustrated.

The gas meter 1 comprises a hollow body 10, which defines a measuring compartment 11 within, and a cover 12, which is adapted to close an access opening 13 of the hollow body 10. In the example considered, the cover 12 comprises an inlet duct 14 and an outlet duct 15 for the gas.

The hollow body 10 and the cover 12 have an elongated shape along a main length direction N, so that the gas meter 1 has a substantially parallelepiped shape.

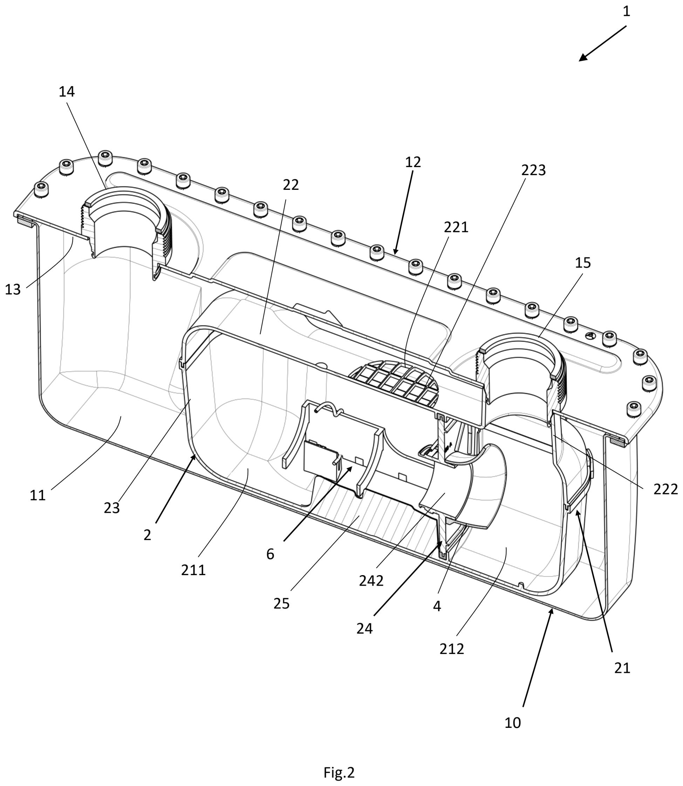

Inside the measuring compartment 11, a flow conveyor is housed, in the sector identified by the corresponding expression *flow conveyor 2* - also indicated as a *muffler* - according to an embodiment of the present invention, as best seen in Figure 2.

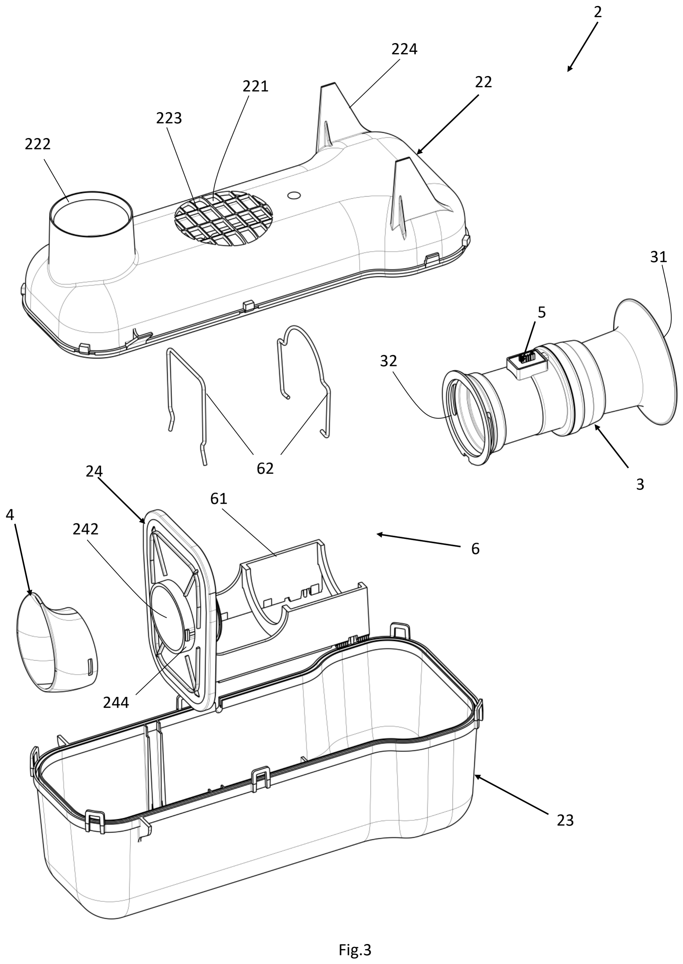

The flow conveyor 2 comprises a box-shaped body 21, preferably of elongated shape along the main length direction N. Preferably, an end portion, at a first end of the box-shaped body 21, has in plan, a dimension transverse to the main length direction N, greater than the dimension of a remaining portion of the box-shaped body 21. Advantageously, this first (inlet) end has a larger volume (and is wider), than the rest of the box-shaped body, to ensure that the incoming gas flow follows the external geometry of the measuring duct 3 (which has a trumpet-shaped end as best seen in Figure 3), thereby reducing possible turbulence phenomena.

In detail, the box-shaped body 21 comprises two shells 22 and 23 adapted to couple with each other - for example, by means of suitable corresponding mechanical fixing elements. A first (upper) shell 22 comprises an inlet opening 221 and an outlet duct 222. Preferably, the inlet opening 221 is formed in a substantially median position with respect to the length of the box-shaped body along the main length direction. Preferably, the opening comprises a grate 223. Advantageously, the grate 223 makes the gas flow entering the flow conveyor 2 laminar, eliminating, or at least reducing, the possibility that the gas flow entering the measuring duct 3 has a turbulent regime.

Otherwise, the outlet duct 222 protrudes substantially at a second end of the box-shaped body 21 along the main length direction (opposite to the first one).

Furthermore, the outlet duct 222 of the box-shaped body 21 is adapted to couple to the outlet duct 15 of the hollow body 10. Preferably, the coupling between the outlet ducts 15 and 222 forms a fluid path that allows gas exit from the gas meter 1 only to the fluid passing through the flow conveyor 2.

Optionally, the first shell 22 comprises spacers 224 adapted to hold the flow conveyor 2 in place, when positioned in the cavity 11 with the cover coupled to the hollow body 10. Preferably, the spacers 223 protrude from the first shell 21 at the first end of the box-shaped body 21.

An inner volume of the box-shaped body 21 is divided into a measuring chamber 211 and an outlet chamber 212 by means of a partition wall 24. Preferably, coupling elements are formed in inner walls of the shells 22 and 23 in order to ensure a stable coupling between the shells 22 and 23 and the partition wall 24. Even more preferably, a perimeter gasket so as to guarantee a hermetic separation of the two chambers 211 and 212. Advantageously, the partition wall 24 comprises an opening 242, preferably formed in a central region of the partition wall 24. The opening 242 is surrounded by a neck 243/244 which protrudes from both faces of the partition wall and comprises fixing means for receiving a measuring duct 3 (illustrated in Figure 3), which is housed in the inlet chamber 211, and a diffuser 4, which is housed in the outlet chamber 212.

In the example of Figure 3, the measuring duct 3 has a substantially cylindrical tubular shape with an inlet opening 31 in fluid communication with the inlet chamber 211 of the box-shaped body 21 and an outlet opening 32 coupled, preferably in a sealed manner, to a neck portion 243 protruding from the wall 24 towards the inlet chamber 211. Preferably, the inlet opening 31 has a flared cross-section. The measuring duct 3 comprises a sensor 5. Preferably, the sensor 5 is of the thermal mass type, known per se and not described here for brevity.

The hollow body 10 comprises an electronic processing unit (not illustrated), which is housed inside a special casing 16 (illustrated in Figure 1) coupled to an external surface of the hollow body 10. The electronic processing unit is adapted to read remotely and manage remotely the gas meter 1. Furthermore, the casing 16 encloses a battery (not illustrated) connected to the electronic processing unit in order to provide the electrical energy necessary for the operation of the electronic processing unit. The electronic processing unit is connected to the sensor 5 to receive measurement signals generated by the sensor 5 and, possibly, to supply power to the sensor 5. For example, the electronic processing unit is connected to the sensor 5 by means of a suitable wiring (not illustrated) and one or more connectors suitable for ensuring the seal tightness of the cavity 11.

Alternatively, the processing unit and the sensor 5 are provided with wireless communication systems such as radio frequency transmitters/transceivers.

Preferably, the flow conveyor 2 houses a support assembly 6 for the measuring duct 3. In the example considered, the support assembly 6 comprises a support 61 shaped so as to hold the measuring duct 3 in an operating position, when coupled to the neck 243. In particular, the operating position provides that the measuring duct 3 and the opening 242 of the partition wall 24 are substantially coaxial. Furthermore, the support assembly 6 comprises a pair of fixing elements 62, adapted to constrain the measuring duct 3 to the support 61.

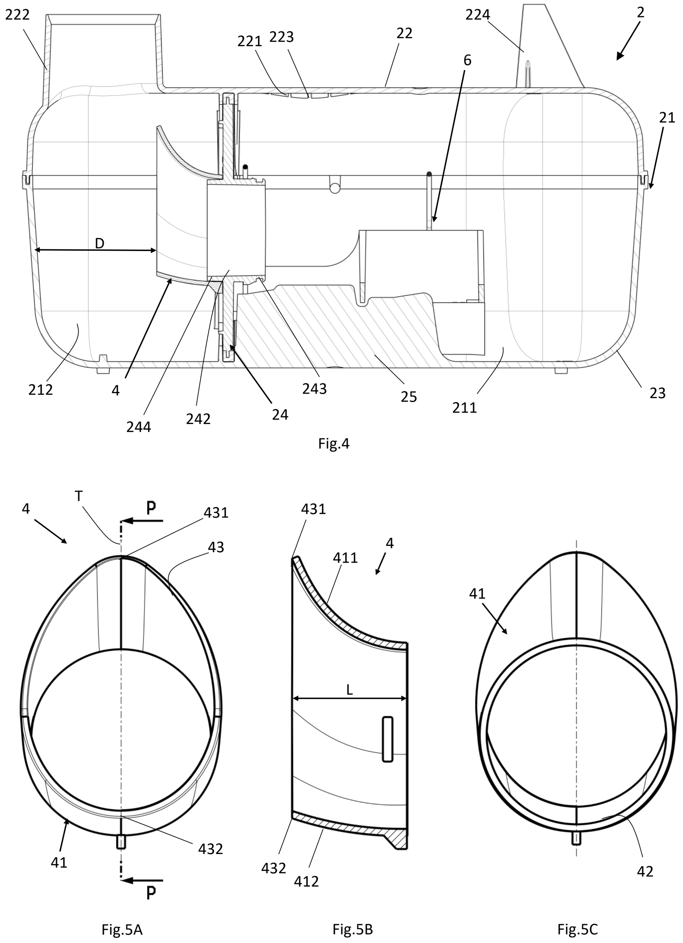

In addition, in the exemplary embodiment considered, the flow conveyor 2 comprises a protruding base 25 which protrudes from a bottom wall of the second shell 23 towards the inside of the inlet chamber 211. The protruding base 25 is adapted to - for example, shaped so as to - receive the support 61 of the support assembly 6 (as best seen in Figures 2 and 4).

With particular reference to Figures 5A-5C, the fluid-dynamic element or diffuser 4 has a tubular asymmetric shape, with a tubular body 41 delimiting an inlet opening 42 of substantially circular shape coupled to the neck 242 and an outlet opening 43 with a lobed, or oval, shape. Preferably, the inlet opening of the diffuser 4 is coupled to the neck portion 244 protruding from the wall 24 towards the outlet chamber 212. For example, the coupling between neck portion 244 and diffuser 4 is made by means of corresponding fixing elements, formed on both elements.

In particular, an area Si of the inlet opening 42 is smaller than an area So of the outlet opening 43. For example, the areas Si and So are sized so that a ratio So/Si thereof is comprised between about 1 and about 2.2, preferably between about 1.2 and about 2 (1.2 ≤ So/Si ≤ 2).

Preferably, the two inlet 42 and outlet 43 openings lie on substantially parallel planes and are spaced apart from each other by a distance of between about 24 mm and about 70 mm, preferably between about 29 mm and about 64 mm - i.e., the diffuser 4 has a width L of between about 29 mm and about 64 mm (29 mm ≤ L ≤ 64 mm).

Furthermore, the diffuser 4 has a flared asymmetric structure. In detail, considering a lateral section (illustrated in Figure 5B) along a section plane P-P lying along a main length direction T of the outlet opening 43 and a diameter of the inlet opening 42, a first (upper) portion 411 of the tubular body 41 is defined by a first radius of curvature R1 comprised between about 25 mm and about 45 mm, preferably between about 30 mm and about 40 mm (30 mm ≤ R1 ≤ 40 mm). Otherwise, a second (lower) portion 412 of the tubular body 41 is defined by a second radius of curvature R2 comprised between about 80 mm and about 105 mm, preferably between about 86 mm and about 100 mm (86 mm ≤ R2 ≤ 100 mm). Preferably, the ratio between the two radii of curvature R1 and R2 (i.e., R1/R2) is comprised between 0.25 and 0.4 (0.25 ≤ R1/R2 ≤ 0.4).

In the example of Figures 5A - 5C, the first portion 411 of the tubular body 41 delimits an apex 431 (or first lobe) of the outlet opening 43 while the second portion 412 of the tubular body 41 defines a base 432 (or second lobe) of the outlet opening 43, where the base 432 is defined by a radius of curvature greater than the radius of curvature defining the apex 431.

Preferably, the diffuser 4 is coupled to the neck 243 such that the apex 431 is closer to the outlet duct 222 than to the base 432 thereof.

Even more preferably, the flow conveyor 2 is shaped so that the outlet opening 43 of the diffuser 4 is at a distance D comprised between about 15 mm and about 60 mm, preferably between about 20 mm and about 55 mm (20 mm ≤ D ≤ 55 mm) from the walls of the flow conveyor 2 delimiting the outlet chamber 212, or at least from the wall of the flow conveyor 2 having an orientation parallel to the outlet opening 43 of the diffuser 4.

The diffuser 4 is designed to slow down the gas flow passing through it, i.e. the speed vi of the incoming gas flow is greater than the speed vo of the exiting flow (vo < vi). The Applicant has found that reducing the flow speed of the gas within the meter results in the reduction of the pressure absorption that characterizes the same meter. In particular, the Applicant has found that the maximum absorption reduction is achievable by imposing a reduction in the gas speed in the area of the gas meter 1 in which the gas flow exits the measuring duct 3, to head towards the outlet of the gas meter 2, i.e. the outlet duct 15. In the gas meter 1 considered, provided with the flow conveyor 2, this area corresponds to the outlet chamber 212 thereof. Therefore, the diffuser 4 is positioned in the outlet chamber 212, as described above, in order to reduce the speed of the gas exiting the meter.

In use, the gas flow enters the measuring compartment 11 delimited by the hollow body 10 through the inlet duct 14 (which is connected to a gas distribution line). From the measuring compartment 11 the gas flow flows into the inlet chamber 211 of the flow conveyor 2, at least once the measuring compartment 11 is saturated with gas. The gas flow, therefore, passes through the measuring duct 3 (which is the only possible path for the gas flow) allowing a particularly reliable measurement of the gas flow. The gas flow passes through the opening 242 of the partition wall 24 and the diffuser 4 and enters the outlet chamber 212 of the flow conveyor 2. Finally, the gas flow leaves the flow conveyor 2 and the gas meter 1 through the series of the outlet ducts 222 and 15 of the flow conveyor 2 and the hollow body 10, respectively. In particular, the speed of the gas flow is reduced during the passage through the diffuser 4 which leads to an overall reduction in the pressure absorption due to the gas meter 1.

However, it is clear that the above examples must not be interpreted in a limiting sense and the invention thus conceived is susceptible of numerous modifications and variations.

In alternative embodiments the diffuser may have a different conformation. For example, instead of a curved tubular body, a tubular body composed of a plurality of portions of flat walls adjacent to each other is defined.

In general, although not in a limiting manner, the diffuser according to the present invention defines a fluid duct with a lateral section increasing from a minimum value corresponding to the inlet opening to a maximum value corresponding to the outlet opening.

The gas meter according to the embodiments of the present invention is preferably characterized by a flow rate greater than 10,000 ls/h, i.e. standard litres per hour, which unit of measurement in the sector is used to indicate the flow rate of an air flow passing at the temperature of 20 °C and at the pressure of 1.01325×10⁴ Pa (1.01325 bar) (conditions corresponding to an air density equal to 1.2 kg/m³). A flow rate of 10,000 ls/h is therefore equivalent to a flow rate of 10, determined using an air flow characterized at the temperature of 20 °C and at the pressure of 1.01325×10⁴ Pa.

For example, the meter belongs to the category called "G25" with a maximum flow rate of about 40 scm/hr.

Naturally, all the details can be replaced with other technically-equivalent elements.

For example, in an alternative embodiment (not illustrated), the sensor may be of another type, such as an ultrasonic sensor. In general, a suitable sensor is configured to detect one or more parameters (temperature, ultrasonic wave attenuation, or other) by means of which a value of the gas flow through the meter can be calculated.

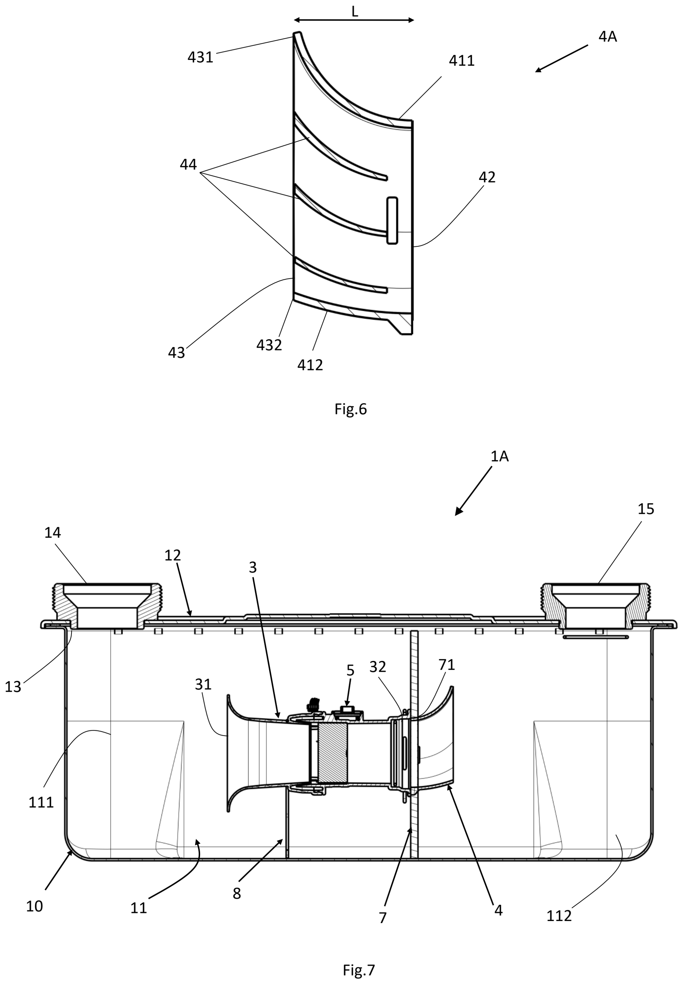

In an alternative embodiment of the diffuser 4A - of which Figure 6 is a sectional side view - there are provided one or more lamellae, or separators 44, three in the example considered. The separators 44 are adapted to at least partially divide the volume delimited by the diffuser 4A, thus defining two or more ducts superimposed on each other in the flowing direction of the fluid.

As illustrated in the example of Figure 6, a generic separator 44 extends between opposite sides of the inner wall of the tubular body 41 of the diffuser 4A in a direction substantially transverse to the direction of the gas passing through it. Preferably, the separator 44 extends, in the direction of the fluid flow, starting from the outlet opening 43 towards the inlet opening 42, preferably without reaching it in order to allow coupling the diffuser 4A to the neck 243 in a robust and simple manner. Further, the separator 44 has a curved lateral section profile, advantageously having a radius of curvature between the first and second radii of curvature R1 and R2, of the first and second portions 411 and 412, respectively, of the tubular body 41.

Preferably, the separators 44 are arranged approximately equidistant along the cross-section of the diffuser. More preferably, the separators 44 are arranged so as to obtain inner ducts characterized by approximately equal sections.

The separators 44 and, in particular, the ducts defined by them with the tubular body 41 allow to obtain a more homogeneous gas flow distribution inside the diffuser 4A, with respect to the diffuser 4, with the same external shape and overall dimensions. This more homogeneous distribution is obtained by keeping substantially unchanged the average value of the speed of the gas flow exiting the diffuser 4A, with respect to the diffuser 4.

The diffuser 4A is particularly suitable in gas meters characterized by high maximum flow rate values, for example greater than 10 scm/hr. The Applicant has noted that, in such gas meters, making the flow of the gas inside the diffuser more homogeneous contributes to further reducing possible turbulences in the gas flow that crosses the area comprised between the outlet of the diffuser and the outlet of the gas meter.

In a different embodiment, the gas meter 1A is without flow conveyors, as illustrated in the sectional side view of Figure 7.

In this case the measuring duct 3 is positioned directly inside the measuring compartment 11 of the gas meter 1A, without intermediate containment structures. In this embodiment, a measuring duct 3 provided with a respective flow rate sensor 5 is provided, and the outlet 32 of the measuring duct 3 is applied to a diffuser 4, in a manner analogous to that described above.

Furthermore, a partition wall, or septum 7 is arranged inside the measuring compartment 11 so as to separate it into an inlet chamber 111 and an outlet chamber 112. An opening 71 is formed in the septum and is adapted to couple to the outlet opening 32 of the measuring duct 3 and to the inlet opening 42 of the diffuser 4, so as to form a single fluid passage between the inlet chamber 111 and the outlet chamber 112. In particular, the measuring duct 3 is positioned in the inlet chamber 111, while the diffuser 4 is positioned in the outlet chamber of the measuring compartment 11. Preferably, the measuring duct 3 and the diffuser 4 are substantially coaxial with each other and with the opening 71 when coupled to the septum 7.

Finally, a support element 8 is arranged inside the measuring compartment 11, in particular, in the inlet chamber in order to hold the measuring duct in a desired operating position, wherein the measuring duct and the opening 71 of the septum 7 are substantially coaxial.

The presence of the diffuser 4 allows to obtain the same advantages of reduction of pressure drops also in the gas meter 1A.

In embodiments adapted to measure very high gas flow rates (not illustrated), the gas meter is provided with two or more sensors, each associated with a respective measuring duct, in turn, housed in a respective flow conveyor. The flow conveyors are housed inside the measuring compartment of the meter, preferably arranged on the bottom wall of the box-shaped body side by side. In this case the gas meter is provided with a manifold that connects the outlet ducts of the flow conveyors to the outlet duct of the gas meter. Preferably, each of the flow conveyors has a structure corresponding to that of the flow conveyor 2 described above. In particular, at least one of the flow conveyors, preferably all, comprise a respective diffuser corresponding to the diffuser 4 described above.

The result is therefore that the meter contains multiple flow sensors, the measurements of which are combined and used to determine the actual flow rates of the meter, by mathematical processing performed by an internal electronic processing system.

In addition, the Applicant has found that a single flow conveyor with diffuser in accordance with the embodiment of the present invention optimally operates with gas flow rates comprised in the range of 10 scm/hr to 50 scm/hr (inclusive).

In the case of gas meters adapted to operate with greater flow rates, the maximum flow rate range manageable by a single flow conveyor - between 10 scm/hr and 50 scm/hr - is considered a submultiple of the maximum flow rate of the gas meter. Thus, the number of necessary flow conveyors corresponds to the ratio between the maximum flow rate of the gas meter and the range of maximum flow rates of the individual flow conveyor. For example, considering a gas meter with maximum flow rate of 160 scm/hr, a minimum number of flow conveyors to be arranged in the measuring compartment is equal to four, considering that four ranges of 10-50 scm/hr are necessary to obtain the maximum flow rate of 160 scm/hr. In this case, each of the four flow conveyors will manage a flow rate of about 40 scm/hr (160 = 40 x 4). In a gas meter with a maximum flow rate of 100 scm/hr, two flow conveyors will be sufficient, each of which will manage a flow rate of about 50 scm/hr.

In another embodiment (not illustrated), the gas meter is without flow conveyors - similarly to the gas meter 1A - but it comprises two or more measuring ducts and diffusers. In this case, the septum is provided with a corresponding number of openings, each adapted to receive a respective measuring duct and a respective diffuser coupled to the opening on opposite faces of the septum, as described above. For example, the openings of the septum are formed so that the measuring ducts and the diffusers are side by side, for example, with the axes of the ducts lying on the same plane. Advantageously, the gas meter comprises a support element, analogous to the support element 8, for each measuring duct, or a single support element shaped to support all the measuring ducts. In this case, the number of the measuring ducts and diffusers will be determined based on the maximum flow rate of the gas meter and a range of maximum flow rates manageable by the measuring ducts, in a manner analogous to that described above for the embodiment comprising two or more flow conveyors.

As will be apparent to the person skilled in the art, the gas meter according to the embodiments of the present invention is adapted to operate effectively with high value maximum flow rates, greater than 10 scm/hr. In particular, the gas meters according to the embodiments of the present invention operate effectively with a maximum flow rate of 160 scm/hr - the upper end of the range of possible maximum flow rate values currently required by the gas meter market - or higher, significantly reducing the pressure drops thereof compared to the known versions without a diffuser. In conclusion, the materials used, as well as the shapes and contingent dimensions of the devices, apparatus and terminals mentioned above, may be any according to the specific implementation needs without thereby departing from the scope of protection of the following claims.

In particular, the diffuser is preferably made of rigid thermoplastic material, produced by a process based on the injection moulding technique. However, the diffuser according to the present invention may be made of another suitable type of material (e.g. a metal) or a combination of two or more materials - for example, the fluid-dynamic element may comprise portions of different materials that are coupled to each other in a removable or non-removable manner.

## Claims

1. Fluid meter (1: 1A) comprising:
a hollow box-shaped body (10), which delimits a measuring compartment (11),
an inlet duct (14) and an outlet duct (15), which allow a flow of fluid into and out of the measuring compartment (11), respectively,
a separator assembly (2; 7) comprised in the measuring compartment which is adapted to define an inlet region (211; 111) adapted to receive the flow of fluid entering the measuring compartment (11) through the inlet duct (14), and an outlet region (212; 112) adapted to receive the flow of fluid exiting the measuring compartment (11) through the outlet duct (15), the separator assembly (2; 7) comprising at least one opening (224; 71) adapted to allow a flow of fluid between the inlet region (211; 111) and the outlet region (212; 112), and
measuring means (3; 5) arranged within the inlet region (211; 111) in order to provide an indication of a quantity of fluid passing therethrough, the measuring means comprising at least one measuring duct (3) coupled to said at least one opening (242; 71) of the separator assembly (2; 7),
**characterised by**
comprising a fluid-dynamic element (4; 4A) arranged in the outlet region (212; 112), the fluid-dynamic element (4; 4A) comprising an inlet opening (42), coupled to the opening (24; 71) of the separator assembly (2; 7), and a free outlet opening (43), where the surface of the outlet opening (43) has a substantially oval shape and is larger than the surface of the inlet opening (42), which has a substantially circular shape.

2. Fluid meter (1; 1A) according to claim 1, wherein a ratio between the surface area of the outlet opening (43) and the inlet opening (42) of the fluid-dynamic element (4; 4A) is comprised between about 1 and about 2.2, preferably between about 1.2 and about 2.

3. Fluid meter (1; 1A) according to claim 1 or 2, wherein the surface of the outlet opening (43) and the inlet opening (42) of the fluid-dynamic element (4; 4A) lie on substantially parallel planes and are spaced apart from each other by a distance of between about 24 mm and about 70 mm, preferably between about 29 mm and about 64 mm.

4. Fluid meter (1; 1A) according to any one of the preceding claims, wherein the fluid-dynamic element (4; 4A) has a flared asymmetric structure, and wherein a tubular body (41) of the fluid-dynamic element (4; 4A) comprises a curved portion (411), which has a lateral section profile defined by a first radius of curvature comprised between about 25 mm and about 45 mm, preferably between about 30 mm and about 40 mm, along a main length direction of the outlet opening (43).

5. Fluid meter (1; 1A) according to claim 4, wherein the tubular body (41) comprises a further curved portion (412), which has a lateral section profile defined by a further radius of curvature comprised between about 80 mm and about 105 mm, preferably between about 86 mm and about 100 mm.

6. Fluid meter (1; 1A) according to any one of the preceding claims, wherein the fluid-dynamic element (4; 4A) comprises a tubular body (11) and at least one separating wall (44) extending inside the tubular body (41), dividing the volume delimited by the tubular body (41) into at least two ducts.

7. Fluid meter (1; 1A) according to claims 6 and 4, wherein the separating wall (44) has a lateral section profile defined by a radius of curvature equal to or smaller than the first radius of curvature.

8. Fluid meter (1; 1A) according to claim 6 or 7 and claim 5, wherein the separating wall (44) has a lateral section profile defined by a radius of curvature equal to or greater than the second radius of curvature.

9. Fluid meter (1) according to any one of the preceding claims, wherein the outlet opening (43) comprises a first lobe (431), defined by a first lobe curvature radius, and a second lobe (432), defined by a second lobe curvature radius, wherein the first lobe curvature radius is smaller than the second lobe curvature radius, and
wherein the first lobe and the second lobe are at a first distance and a second distance, respectively, from the outlet duct (15), wherein the first distance is smaller than the second distance.

10. Fluid meter (1) according to any one of the preceding claims, wherein the outlet opening (43) of the fluid-dynamic element (4; 4A) faces a wall delimiting the outlet region (212; 112), wherein the outlet opening (43) is at a distance comprised between about 15 mm and about 60 mm, preferably between about 20 mm and about 55 mm, from said wall delimiting the outlet region (212; 112).

11. Fluid meter (1) according to any one of the preceding claims, wherein the separator assembly (2; 7) comprises a box-shaped body (21) housed inside the measuring compartment (11), the inlet region (211) and the outlet region (212) being delimited by the box-shaped body (21) and a wall (24) arranged inside the box-shaped body, and
wherein an inlet opening (221) of the box-shaped body (21) allows access of the flow of fluid from the measuring compartment (11) to the inlet region (211), while a further outlet duct (222) of the separator assembly (2; 7) is coupled to the outlet duct (15) of the gas meter (1, 1A) so that only the fluid inside the outlet region (212) can leave the fluid meter.

12. Fluid meter (1) according to claim 11, comprising a plurality of separator assemblies (2), wherein the box-shaped body (21) of each separator assembly (2) houses a respective measuring duct (3) and a respective fluid-dynamic element (4).

13. Fluid meter (1A) according to any one of the preceding claims, wherein the separator assembly (2; 7) comprises a septum (7) arranged in the measuring compartment (11) and adapted to separate the measuring compartment (11) into the inlet region (111) and the outlet region (112).

14. Fluid meter (1A) according to claim 13, wherein the septum (7) comprises a plurality of openings (71) adapted to allow a flow of fluid between the inlet region (111) and the outlet region (112), wherein a respective measuring duct (3) and a respective fluid-dynamic element (4) are coupled to each opening (71) of the plurality of openings.

15. Fluid meter (1, 1A) according to any one of the preceding claims, sized to have a maximum flow rate greater than 10 m³/h, measured with an air flow with density equal to 1.2 kg/m3.
